# EUROPEAN PATENT SPECIFICATION

(11) **EP 1 396 420 B1**
(45) Date of publication and mention of the grant of the patent: **30.11.2005**
(21) Application number: 03019298.3
(22) Date of filing: 26.08.2003
(51) Int. Cl.: B62M 27/02

(54) **Saddle ride type vehicle torque damping device**
Torsionsschwingungsdämpfer für ein Zweiradfahrzeug
Amortisseur de torsion pour véhicules du type à selle

(30) Priority: 27.08.2002 JP 2002246407
(43) Date of publication of application: 10.03.2004
(73) Proprietor: YAMAHA HATSUDOKI KABUSHIKI KAISHA, Iwata-shi Shizuoka-ken (JP)
(72) Inventor: Yamamoto, Masanobu, Iwata-shi Shizuoka-ken (JP)
(74) Representative: Grünecker, Kinkeldey, Stockmair & Schwanhäusser Anwaltssozietät

(56) References cited:
- EP-A- 0 049 805
- EP-A- 0 960 808
- US-A- 3 120 745
- US-A- 4 328 879
- US-A1- 2002 033 063
- US-A1- 2002 033 162
- US-B1- 6 250 276
- US-B1- 6 344 008

## Description

The present invention relates to a saddle-riding type vehicle with a drive device, comprising a drive means being supported on a vehicle body and being placeable on a travel surface, an engine being supported on the vehicle body, and a speed change gear connecting the drive means to a crankshaft of the engine, wherein an input shaft of said speed change gear is connected to one end of said crankshaft via a damping means.

In such a saddle-riding type vehicle, as for example a snowmobile or the like, a drive means placed on a travel surface to revolve is interlockingly connected to an internal-combustion engine for traveling drive, via a speed change gear.

Drive devices in a snowmobile being a saddle-riding type vehicle conventionally include one constructed in the following manner.

More specifically, such a snowmobile comprises a drive means, which is supported on a vehicle body and placed on a travel surface, and rotation of which enables the vehicle body to travel, an internal-combustion engine for traveling drive, supported on the vehicle body, and a speed change gear to interlockingly connect the drive means to a crankshaft of the internal-combustion engine.

Also, the speed change gear comprises an input shaft interlocked with the crankshaft, an output shaft interlocking with the drive means to output a drive force to the drive means, and belt-wrapping type interlocking means interlocking the output shaft with the input shaft.

When the internal-combustion engine is driven to transmit its drive force to the drive means via the speed change gear, the drive means travels and drives to thereby enable the snowmobile to travel on a travel surface.

Here, since a large torque is transmitted to the input shaft from the crankshaft, it is desired that strength, with which the input shaft is supported on the crankshaft, be further enhanced. When it is simply tried to enhance the strength for support, however, there is a fear that a portion supporting the input shaft becomes heavy in the internal-combustion engine, that is, there is a fear that the snowmobile becomes heavy, which is not preferable.

Besides, a vehicle of the above kind is known from US 6,344,008 B1. However, it is not specified therein how to configure the damping means provided between the engine and the transmission to securely transmit the engine's driving force without increasing the weight of the vehicle.

A saddle-riding type vehicle according to the preamble of claim 1 is known from US 2002033063.

It is, therefore, an object of the invention to improve a saddle-riding type vehicle of the above kind in that the driving force of the engine can be reliably transmitted without heavily increasing the weight of the vehicle.

Accordingly, for a saddle-riding type vehicle of the above kind, this objective is solved in an inventive manner in that the damping means is a torque transmitting means wherein a plurality of resilient members is provided between radially extending surfaces of a drive-side body and a driven-side body, and wherein said input shaft and said crankshaft are disposed on a common rotational axis, according to claim 1.

Therefore, those impact forces given to the input shaft by the crankshaft, which are caused due to torque nonuniformity in the crankshaft, are damped by the damper. Since preferably the damper is mainly made of the rubber cushioning members to be generally lightweight, strength, with which the input shaft is supported on the internal-combustion engine, can be substantially enhanced while an increase in weight is avoided, that is, an increase in weight of the snowmobile can be prevented.

Further preferred embodiments of the invention are subject to the subclaims.

In the following, the invention will be described by means of embodiments thereof with reference to the accompanying drawings, wherein:

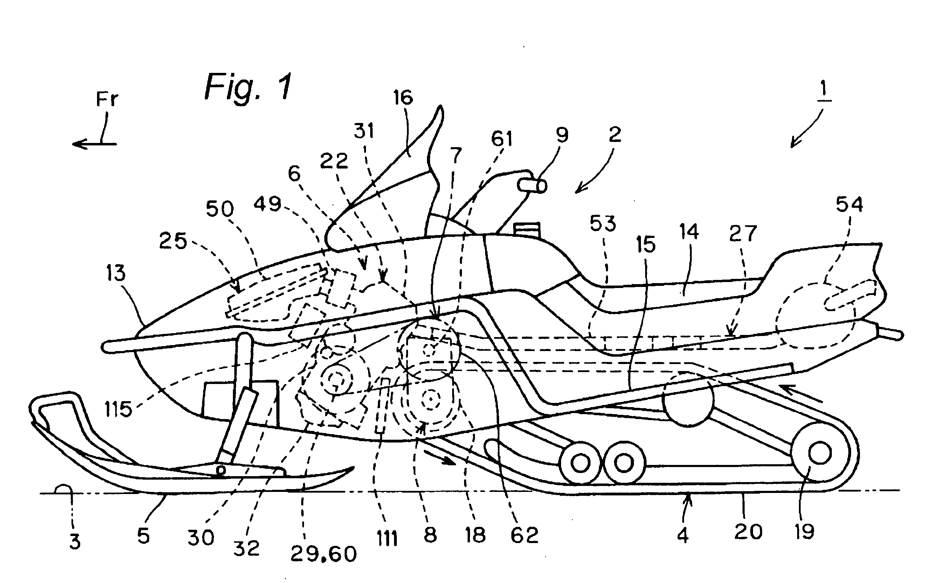

- Fig. 1: is a side view showing a whole snowmobile;

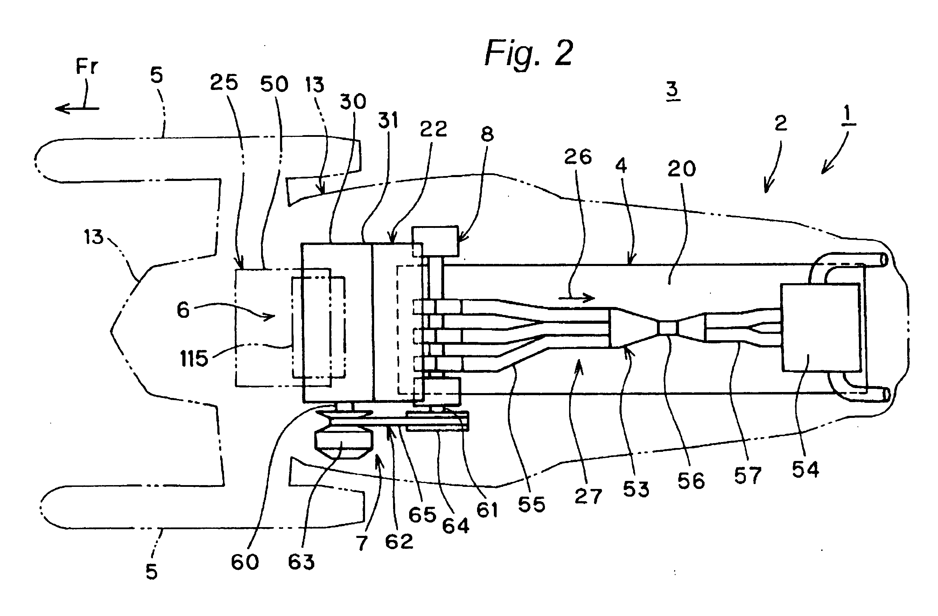

- Fig. 2: is a simplified, partial plan view showing the snowmobile;

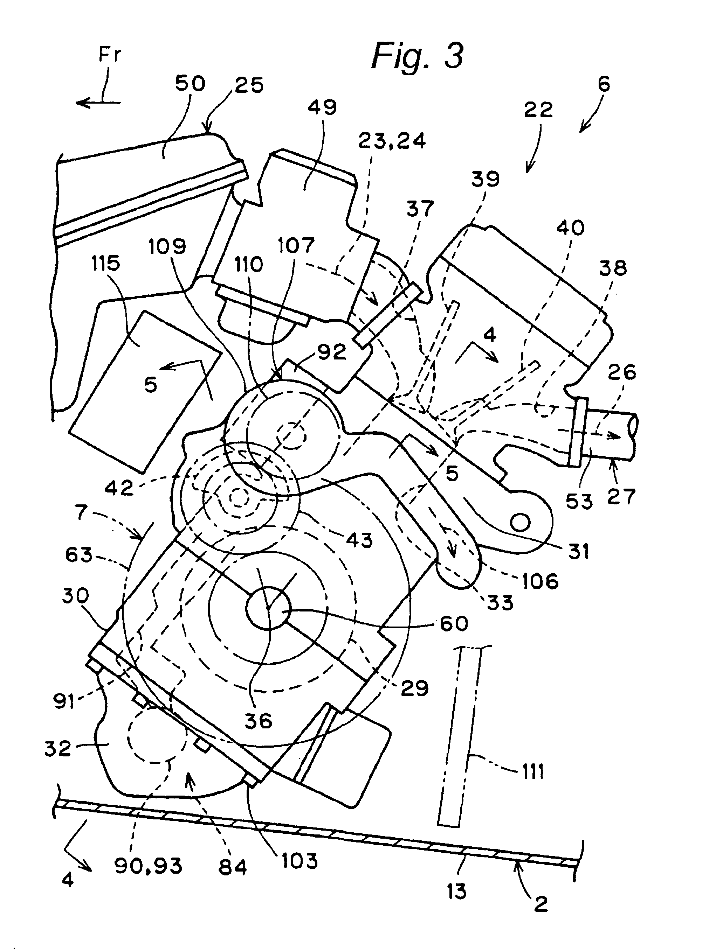

- Fig. 3: is a partial, enlarged view of Fig. 1;

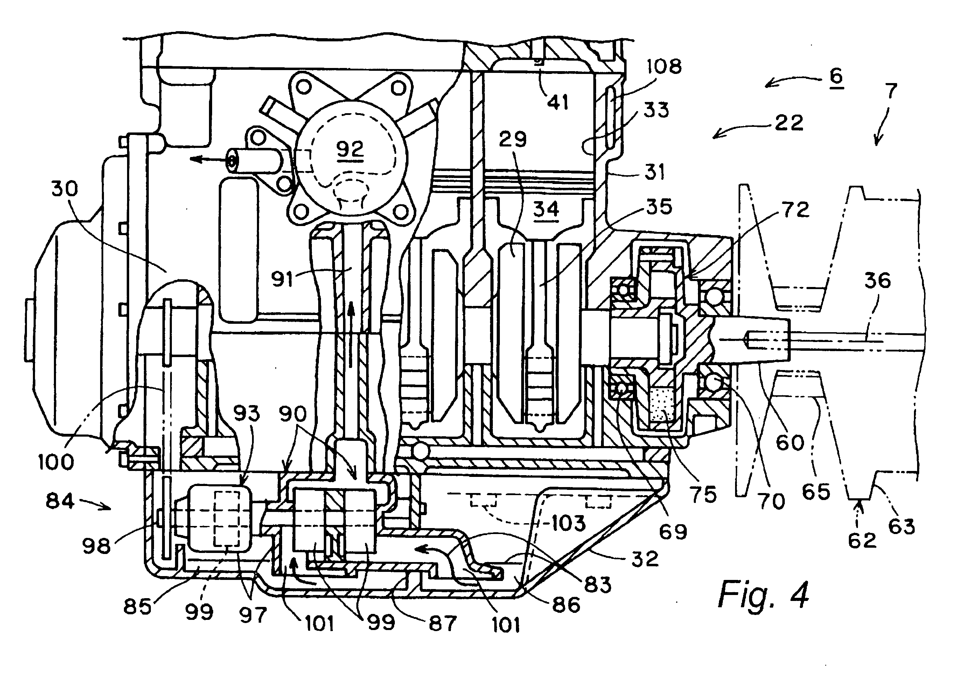

- Fig. 4: is a cross sectional view taken along the line 4 - 4 in Fig. 3;

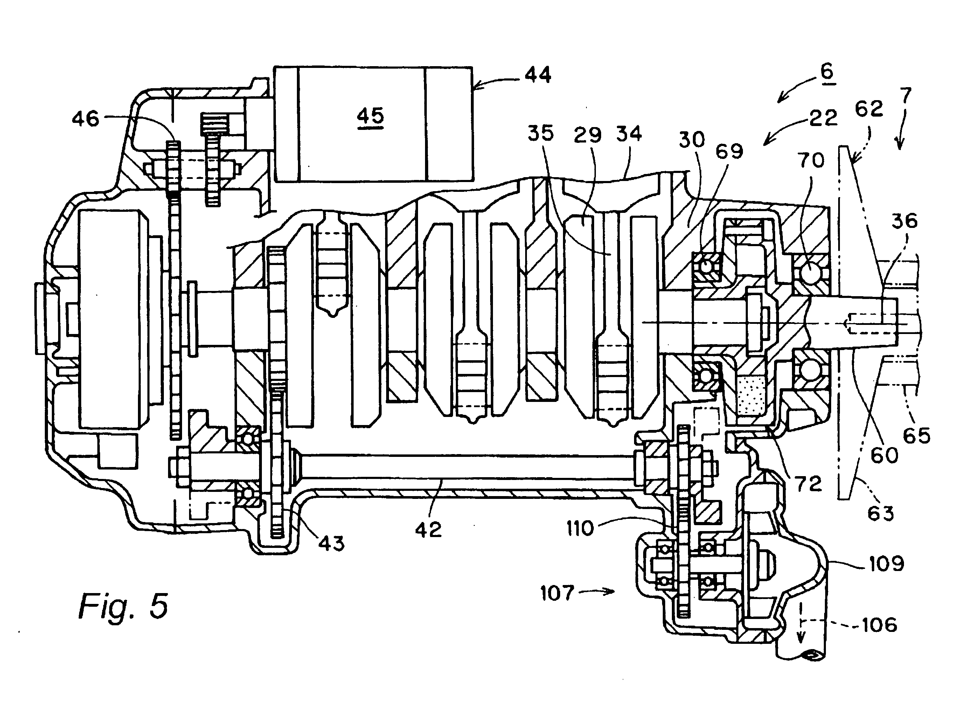

- Fig. 5: is a cross sectional view taken along the line 5 - 5 in Fig. 3;

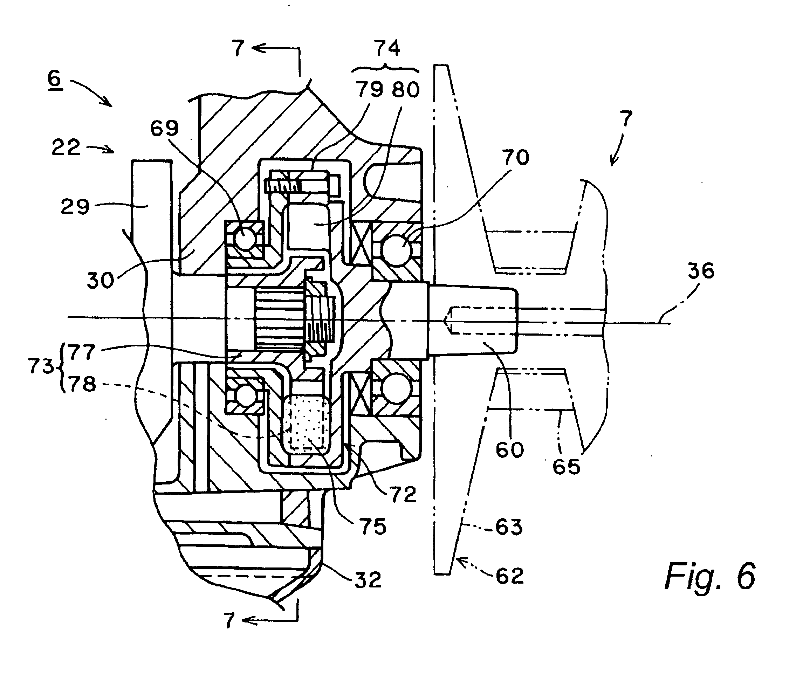

- Fig. 6: is a partial, enlarged view of Fig. 4; and

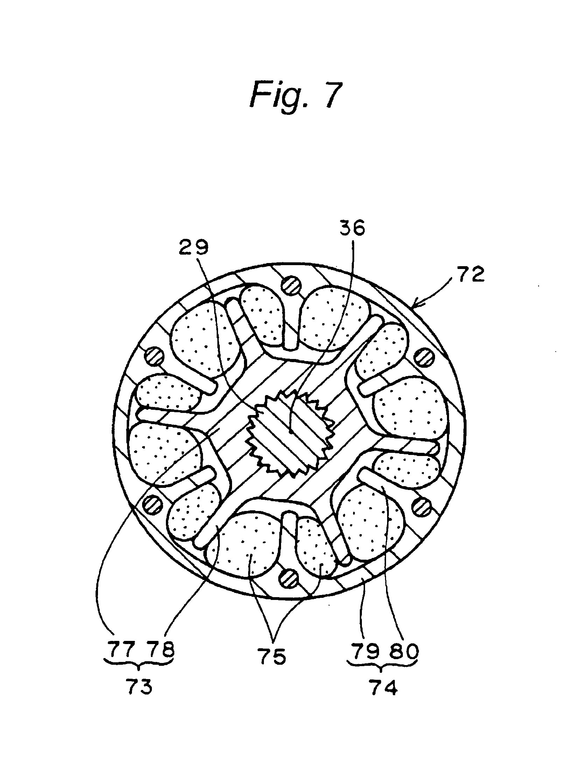

- Fig. 7: is a cross sectional view taken along the line 7 - 7 in Fig. 6.

In the drawings, the reference numeral 1 denotes a saddle-riding type vehicle, as an example of which a snowmobile is shown. Also, an arrow Fr in the drawings indicates a front of the snowmobile 1.

The snowmobile 1 comprises drive means 4, which is supported on a rear part of a vehicle body 2 and placed on a travel surface 3 being a snow surface, and rotation of which enables the vehicle body 2 to travel, a pair of steering skis 5, 5, which are steerably born on the front of the vehicle body 2 and placed on the travel surface 3, and steering of which enables the vehicle body 2 to be steered, an internal-combustion engine 6 for traveling drive, disposed in and supported by an intermediate portion in a longitudinal direction of the vehicle body 2, an automatic transmission speed change gear 7 interlockingly connected to the internal-combustion engine 6, and a gear-type power transmission device 8 interlockingly connected to the speed change gear 7 and interlockingly connected to the above drive means 4. More specifically, the drive means 4 and the internal-combustion engine 6 are interlockingly connected to each other through the speed change gear 7 and the power transmission device 8, and a steering handle 9 is born by the vehicle body 2 to be interlockingly connected to the respective steering skis 5.

The vehicle body 2 comprises a vehicle body member 13 having a vehicle body frame, which serves as a framework, a seat 14, which is disposed rearwardly of the steering handle 9 to be supported on the vehicle body member 13, and on which a rider can be seated, foot rests 15, which are projectingly provided on respective right and left sides of the vehicle body member 13 and on which a rider can place feet, and a shield 16 projectingly provided in the vicinity of the front of the steering handle 9 to be directed upward from the vehicle body member 13.

The drive means 4 comprises drive and driven rotating wheels 18, 19 rotatably supported on the vehicle body 2 through suspensions, and a track belt 20, which is trained around the both rotating wheels 18, 19, and an underside of a rear part of which extends substantially horizontally to come into surface contact with the travel surface 3.

The internal-combustion engine 6 is a 4-cycle multi-cylinder (three cylinders) engine and comprises an internal-combustion engine body 22 supported on the vehicle body 2, an intake device 25 for introducing an air 23 on an atmospheric side and a fuel 24 into the internal-combustion engine body 22, and an exhaust device 27 for discharging exhaust gases 26 after combustion in the internal-combustion engine body 22, to the atmospheric side.

The internal-combustion engine body 22 comprises a crank case 30 supported on the vehicle body 2 to bear a crankshaft 29, cylinders 31 projecting rearwardly upward from the crank case 30, an oil pan 32 provided to cover an underside of the crank case 30 from below, pistons 34 slidably fitted into cylinder holes 33 of the cylinders 31, and a connecting rod 35 interlockingly connecting the crankshaft 29 and the pistons 34 together, and an axis 36 of the crankshaft 29 extends horizontally in a widthwise direction (right and left direction) of the vehicle body 2.

The internal-combustion engine 6 comprises intake and exhaust passages 37, 38 formed on projecting ends of the cylinders 31 to provide communication between inside and outside the cylinder holes 33, intake and exhaust valves 39, 40 for openably closing the intake and exhaust passages 37, 38, a valve operating mechanism (not shown) for suitably opening and closing the intake and exhaust valves 39, 40 interlocking with the crankshaft 29, and ignition plugs 41, discharge portions of which face combustion chambers at upper ends of the cylinder holes 33.

The internal-combustion engine 6 comprises a balancer shaft 42 disposed above and in the vicinity of the crankshaft 29 to extend in parallel to the crankshaft 29, gear-type interlocking means 43 for interlocking the balancer shaft 42 with the crankshaft 29, and a starter device 44 for interlocking connection of the crankshaft 29 to enable starting up the internal-combustion engine 6, and the starter device 44 comprises a starter motor 45 supported on the cylinders 31, and gear-type interlocking means 46 for interlocking the crankshaft 29 with the starter motor 45.

The intake device 25 comprises a carburetor 49 provided contiguously in front of the cylinders 31 and capable of supplying the air 23 and the fuel 24 into the cylinder holes 33 through the intake passages 37, and an air cleaner 50 for filtering the air 23 on the atmospheric side to supply the same to the carburetor 49, the air cleaner 50 being arranged upward in front of the cylinders 31, forwardly of upper front surfaces of the cylinders 31, and above and in front of the balancer shaft 42.

The exhaust device 27 comprises an exhaust pipe 53 extending rearward from the cylinders 31 of the internal-combustion engine 6, and a muffler 54 connected to an extension end of the exhaust pipe 53. The exhaust pipe 53 comprises a plurality (three) of exhaust pipe members 55 constituting a forward part of the exhaust pipe 53 and extending rearward from the respective cylinders of the internal-combustion engine 6, a single collecting pipe 56 constituting an intermediate part of the exhaust pipe 53 in a longitudinal direction and collecting extension ends of the respective exhaust pipe members 55 together, and a plurality (two) of further exhaust pipe members 57, 57 constituting a rear part of the exhaust pipe 53 and communicating the muffler 54 with the collecting pipe 56.

The speed change gear 7 comprises an input shaft 60 disposed outside a free one end of the crankshaft 29 and on the same axis as the axis 36 of the crankshaft 29 to be interlocked with the crankshaft 29, an output shaft 61 interlocking with the drive means 4 via the power transmission device 8 to output a drive force to the drive means 4, and belt-wrapping type interlocking means 62 interlocking the output shaft 61 with the input shaft 60. The interlocking means 62 comprises a drive pulley 63 supported on the input shaft 60 to rotate together with the input shaft 60, a driven pulley 64 supported on the output shaft 61 to rotate together with the output shaft 61, and a V-belt 65 trained around the drive pulley 63 and the driven pulley 64, and the higher in speed the input shaft 60, the automatically smaller a speed reduction ratio.

The input shaft 60 is interlockingly connected to the crankshaft 29 as follows. More specifically, a pair of bearings (i.e., right and left bearings) 69, 70 cause one end of the input shaft 60 to cantilever on the crank case 30 so that the input shaft is made rotatable about the axis 36. Also, the drive pulley 63 is supported on the other end of the input shaft 60 and one base end of the input shaft 60 is interlockingly connected to one end of the crankshaft 29 by means of a damper 72. The damper 72 comprises a drive-side rotating body 73 supported on the crankshaft 29 to rotate together with the crankshaft 29, a driven-side rotating body 74 formed on the base of the input shaft 60, and rubber cushioning members 75 provided between the drive-side rotating body 73 and the driven-side rotating body 74 to cushion and transmit a drive force between the drive-side rotating body 73 and the driven-side rotating body 74.

The drive-side rotating body 73 comprises a cylindrical-shaped boss portion 77 supported on the one end of the crankshaft 29 in spline fitting, and a plurality of projecting bodies 78 extending radially outwardly of the boss portion 77 to project radially. Meanwhile, the driven-side rotating body 74 comprises a casing 79 formed on the base of the input shaft 60 to be box-shaped in a manner to wholly cover the drive-side rotating body 73 and the cushioning members 75 from outside and supported at both ends thereof on the crank case 30 with the respective bearings 69, 70, and further projecting bodies 80 formed projectingly on an inner surface of the casing 79 to be fitted between the respective projecting bodies 78 circumferentially around the axis 36, the cushioning members 75 being interposed between the circumferentially adjacent projecting bodies 78, 80.

A lubricating device 84 is provided to lubricate the internal-combustion engine 6 with a lubricating oil 83. The lubricating device 84 comprises the oil pan 32 capable of storing therein the lubricating oil 83, and a restraint wall 87 disposed between a one-side chamber 85 and the other-side chamber 86 inside the oil pan 32 in the widthwise direction of the vehicle body 2, the restraint wall 87 being arranged substantially centrally in the widthwise direction of the vehicle body 2 to restrict flow of the lubricating oil 83 between the both chambers 85, 86.

The lubricating device 84 comprises a pair of right and left oil pumps 90, 90 comprising scavenging pumps capable of drawing the lubricating oil 83 inside the oil pan 32, an oil passage 91 formed in the cylinders 31 to feed the lubricating oil 83, which is drawn by the respective oil pumps 90, into a lubricating oil tank (not shown) to store therein the lubricating oil, an oil cooler 92 mounted on the front surfaces of the cylinders 31 to cool the lubricating oil 83, which is drawn by the respective oil pumps 90 through the oil passage 91, and an oil feed pump 93 for supplying the lubricating oil 83, stored in the lubricating oil tank, to respective lubricated portions of the internal-combustion engine 6, the oil pumps 90, 90, respectively, being provided for the one-side chamber 85 and the other-side chamber 86, that is, the pair of right and left oil pumps being provided.

The respective oil pumps 90, 93 comprise pump casings 97 received inside the one-side chamber 85 among the both chambers 85, 86 to define respective outer shells thereof and detachably clamped to the underside of the crank case 30 by fasteners, pump shafts 98 born by the respective pump casings 97 to be rotatable about an axis extending in the widthwise direction of the vehicle body 2, and rotors 99, respectively, received in the respective pump casings 97 to rotate with the pump shafts 98.

The pump casings 97 of the oil pumps 90 are molded together. Suction ports 101 of the lubricating oil 83 into the pump casings 97 of the respective oil pumps 90 are provided in pair on right and left sides, the respective suction ports 101 being opened to respective bottoms of the one-side chamber 85 and the other-side chamber 86. Also, the respective pump shafts 98 are formed integrally on the same axis and interlockingly connected to the crankshaft 29 by means of chain-trained type interlocking means 100, that is, the respective oil pumps 90, 93 can be driven together with the internal-combustion engine 6.

As the internal-combustion engine 6 is driven, the respective oil pumps 90 comprising scavenging pumps are driven to cause the lubricating oil 83 in the oil pan 32 to be drawn and fed to the lubricating oil tank. Meanwhile, the oil feed pump 93 comprising a feed pump is driven to cause the lubricating oil 83 stored in the lubricating oil tank to be fed to the respective lubricated portions of the internal-combustion engine 6 to lubricate the same, and the lubricating oil 83 after lubrication naturally flows down to be returned to the one-side chamber 85 and the other-side chamber 86 in the oil pan 32.

The oil pan 32 is detachably clamped to the underside of the crank case 30 by fasteners 103. When the oil pan 32 is dismounted from the underside of the crank case 30, the respective oil pumps 90, 93 and a lower portion of the interlocking means 100 will protrude downward from the underside of the crank case 30, thus enabling operations for mounting and dismounting the interlocking means 100 from the pump shafts 98 and the work of maintenance and inspection on the respective oil pumps 90, 93 and the interlocking means 100.

There is provided a cooling device 107 for cooling the internal-combustion engine 6 with a cooling water 106. The cooling device 107 comprises water jackets 108 formed in the cylinders 31 and the oil cooler 92, a water pump 109 arranged above the crankshaft 29 to be supported on the cylinders 31 to be able to feed the cooling water 106 to the water jackets 108, gear-type interlocking means 110 to interlockingly connect a rotor of the water pump 109 to the balancer shaft 42, and a heat exchanger 111 arranged rearwardly of and in the vicinity of the crank case 30 for air-cooling the cooling water 106 having been fed to the water jackets 108 to cool peripheries of the water jackets 108, and as the internal-combustion engine 6 is driven, the water pump 109 interlocks with the balancer shaft 42 via the interlocking means 110, so that respective portions of the internal-combustion engine 6 are cooled.

There is provided a battery 115 for supplying electric power to the ignition plugs 41 of the internal-combustion engine 6, the starter motor 45 of the starter device 44, an engine control device (not shown), and so on, and the battery 115 is arranged above the front surfaces of the cylinders 31, in front of the front surfaces of the cylinders 31, in front of the balancer shaft 42, in a space below the air cleaner 50, and substantially centrally in the widthwise direction of the vehicle body 2, the battery 115 being supported by the vehicle body 2.

When the starter motor 45 of the starter device 44 cranks the crankshaft 29 to start up the internal-combustion engine 6, an air 23 is sucked into the cylinders 31 sequentially through the air cleaner 50 of the intake device 25, the carburetor 49, and the intake passages 37 and a fuel 24 fed from the carburetor 49 is sucked into the cylinders 31, so that a mixture composed of the air 23 and the fuel 24 is ignited and burnt in the cylinder holes 33 of the cylinders 31 by the ignition plugs 41 while combustion gases are discharged as exhausted gases 26 outside the internal-combustion engine 6 sequentially through the exhaust passages 38, the exhaust pipe 53 of the exhaust device 27, and the muffler 54, and thus the internal-combustion engine 6 continues to run. And a drive force of the internal-combustion engine 6 is transmitted to the drive rotating wheels 18 of the drive means 4 sequentially via the speed change gear 7 and the power transmission device 8, and the track belt 20 is revolvingly driven whereby the snowmobile 1 can be made to travel.

With the arrangement described above, the input shaft 60 cantilevers directly on the crank case 30 instead of being supported on a free end, or a projecting end of the crankshaft 29 as in the related art.

Here, since the crank case 30 has larger strength and rigidity as compared with the free end of the crankshaft 29, strength, with which the input shaft 60 is supported on the internal-combustion engine 6, can be enhanced while an increase in weight is avoided.

Besides, the base of the input shaft 60 is interlockingly connected to the one end of the crankshaft 29 via the damper 72.

Therefore, those impact forces given to the input shaft 60 by the crankshaft 29, which are caused due to torque nonuniformity in the crankshaft 29, are damped by the damper 72, and since the damper 72 is mainly made of the rubber cushioning members 75 to be generally lightweight, strength, with which the input shaft 60 is supported on the internal-combustion engine 6, can be substantially enhanced while an increase in weight is avoided, that is, an increase in weight of the snowmobile 1 can be prevented.

Also, as described above, the damper 72 comprises the drive-side rotating body 73 rotating together with the crankshaft 29, the driven-side rotating body 74 formed on the base of the input shaft 60, and the rubber cushioning members 75 provided between the drive-side rotating body 73 and the driven-side rotating body 74 to cushion and transmit a drive force between the drive-side rotating body 73 and the driven-side rotating body 74, and the driven-side rotating body 74 is box-shaped in a manner to cover the drive-side rotating body 73 and the cushioning members 75 from outside.

Therefore, the driven-side rotating body 74 formed on the base of the input shaft 60 is increased in strength and rigidity due to a simple configuration as compared with the case where the driven-side rotating body 74 is in the form of a simple shaft. Therefore, strength, with which the input shaft 60 is supported on the internal-combustion engine 6, can be further enhanced while an increase in weight is avoided.

Also, as described above, the driven-side rotating body 74 is supported at both ends thereof on the crank case 30.

Therefore, owing to a simple configuration, in which the base of the input shaft 60 is supported at both ends thereof, strength, with which the input shaft 60 is supported on the internal-combustion engine 6, can be further enhanced while an increase in weight is avoided.

In addition, while the above configuration has been illustrated, the invention is by no means restricted to a snowmobile, the vehicle may be a motorcycle, four-wheel motor car, a small-sized boat sliding on the water surface, a lawn mower or any other kind of motor driven vehicle or device holding a motor or an internal-combustion engine. Also, there may be provided a plurality of restraint walls 87, and there may be provided a single oil pump 90.

The invention produces the following (not limiting) effects.

As described above, a drive device in saddle-riding type vehicles comprises drive means, which is supported on a vehicle body and placed on a travel surface, and rotation of which enables the vehicle body to travel, an internal-combustion engine for traveling drive, supported on the vehicle body, and a speed change gear to interlockingly connect the drive means to a crankshaft of the internal-combustion engine, and wherein the speed change gear comprises an input shaft disposed outside one end of the crankshaft and on the same axis as that of the crankshaft to be interlocked with the crankshaft, and wherein the input shaft cantilevers on a crank case of the internal-combustion engine.

Here, since the crank case has larger strength and rigidity as compared with the free end of the crankshaft, strength, with which the input shaft is supported on the internal-combustion engine, can be enhanced while an increase in weight is avoided.

Besides, the base of the input shaft is interlockingly connected to the one end of the crankshaft via the damper.

Therefore, those impact forces given to the input shaft by the crankshaft, which are caused due to torque nonuniformity in the crankshaft, are damped by the damper, and since the damper is generally lightweight, strength, with which the input shaft is supported on the internal-combustion engine, can be substantially enhanced while an increase in weight is avoided, that is, an increase in weight of the vehicle can be prevented.

Preferably, the damper comprises a drive-side rotating body to rotate together with the crankshaft, a driven-side rotating body formed on the base of the input shaft, and cushioning members provided between the drive-side rotating body and the driven-side rotating body to cushion and transmit a drive force between the drive-side rotating body and the driven-side rotating body, and wherein the driven-side rotating body is box-shaped in a manner to externally cover the drive-side rotating body and the cushioning members.

Therefore, the driven-side rotating body formed on the base of the input shaft is increased in strength and rigidity due to a simple configuration as compared with the case where the driven-side rotating body is in the form of a simple shaft. Therefore, strength, with which the input shaft is supported on the internal-combustion engine, can be further enhanced while an increase in weight is avoided.

Preferably, the driven-side rotating body is supported at both ends thereof on the crank case.

Therefore, owing to a simple configuration, in which the base of the input shaft is supported at both ends thereof, strength, with which the input shaft is supported on the internal-combustion engine, can be further enhanced while an increase in weight is avoided.

To enhance strength, with which an input shaft of a speed change gear is supported on a crankshaft of an internal-combustion engine mounted in a vehicle and to avoid an increase in weight of the vehicle even in such case, a vehicle is proposed comprising a drive means 4, which is supported on a vehicle body 2 and placed on a travel surface 3, and rotation of which enables the vehicle body 2 to travel, an internal-combustion engine 6 for traveling drive, supported on the vehicle body 2, and a speed change gear 7 to interlockingly connect the drive means 4 to a crankshaft 29 of the internal-combustion engine 6. The speed change gear 7 comprises an input shaft 60 disposed outside one end of the crankshaft 29 and on the same axis as that of the crankshaft 29 to be interlocked with the crankshaft 29. The input shaft 60 cantilevers on a crankcase 30 of the internal-combustion engine 6. A base of the input shaft 60 interlockingly connects with one end of the crankshaft 29 through a damper.

## Claims

1. Saddle riding type vehicle with a drive device, comprising:
a drive means (4) being supported on a vehicle body (2) and being placeable on a travel surface (3),
an engine (6) being supported on the vehicle body (2), and
a speed change gear (7) connecting the drive means (4) to a crankshaft (29) of the engine (6), wherein
an input shaft (60) of said speed change gear (7) is connected to one end of said crankshaft (29) via a damping means (72),
**characterized in that**
the damping means (72) is a torque transmitting means (72) wherein a plurality of resilient members (75) is provided between radially extending surfaces of a drive-side body (73) and a driven-side body (74), and wherein said input shaft (60) and said crankshaft (29) are disposed on a common rotational axis (36).

2. Saddle-riding type vehicle according to claim 1, **characterized in that** said input shaft (60), in particular a drive force receiving end thereof, is rotatably supported on the crank case (30).

3. Saddle-riding type vehicle according to one of the claims 1 or 2, **characterized in that** the input shaft (60), in particular a drive force transmitting end thereof, cantilevers on the crank case (30) in prolongation of said crankshaft (29).

4. Saddle-riding type vehicle according to at least one of the claims 1 to 3, **characterized in that** the damping means comprises a resilient clutch, in particular comprising a drive-side rotating body (73) to rotate together with the crankshaft (29), a driven-side rotating body (74) formed on the base of the input shaft (60), and cushioning members (75) provided therebetween, preferably made of a rubber-like material.

5. Saddle-riding type vehicle according to claim 4, **characterized in that** the driven-side rotating body (74) is box-shaped in a manner to externally cover the drive-side rotating body (73) and the cushioning members (75).

6. Saddle-riding type vehicle according to at least one of the claims 1 to 5, **characterized in that** said damping means (72) is substantially enclosed within said crankcase (30).

7. Saddle-riding type vehicle according to at least one of the claims 4 to 6, **characterized in that** the driven-side rotating body (74) is supported at both ends thereof on the crank case (30).

8. Saddle-riding type vehicle according to at least one of the claims 1 to 7, **characterized in that** the input shaft (60) is rotatably supported on the crank case (30) by means of two separate bearings (69,70) being spaced apart by the damping means (72).

9. Saddle-riding type vehicle according to at least one of the claims 1 to 8, **characterized in that** the cantilevering end of the input shaft (60) is interlockingly connected to a drive pulley (63) of a belt-wrapping type interlocking means (62).

## Patentansprüche

1. Fahrzeug vom Typ, das im Sattel gefahren wird, mit einer Antriebsvorrichtung, mit:
einer Antriebsvorrichtung (4), die in einer Fahrzeugkarosserie (2) gelagert ist und
auf einer Fahroberfläche (3) platzierbar ist,
einem Motor (6), der in der Fahrzeugkarosserie (2) gelagert ist, und einem Gangwechselgetriebe (7), das die Antriebsvorrichtung (4) mit einer Kurbelwelle (29) des Motors (6) verbindet, wobei
eine Eingangswelle (60) des Gangwechselgetriebe (7) mit einem Ende der Kurbelwelle (29) über eine Dämpfungseinrichtung (72) verbunden ist,
**dadurch gekennzeichnet, dass**
die Dämpfungseinrichtung (72) eine Drehmomentübertragungseinrichtung (72) ist, wobei eine Mehrzahl von elastischen Teilen (75) zwischen sich radial erstreckenden Flächen einer antriebsseitigen Körpers (73) und einem abtriebsseitigen Körper (74) vorgesehen ist, und wobei die Eingangswelle (60) und die Kurbelwelle (29) auf einer gemeinsamen Drehachse (36) angeordnet sind.

2. Fahrzeug vom Typ, das im Sattel gefahren wird, nach Anspruch 1, **dadurch gekennzeichnet, dass** die Eingangswelle (60), insbesondere ein Antriebskraft- Aufnahmeende derselben, in dem Kurbelgehäuse (30) drehbar gelagert ist.

3. Fahrzeug vom Typ, das im Sattel gefahren wird, nach einem der Ansprüche 1 oder 2, **dadurch gekennzeichnet, dass** die Eingangswelle (60), insbesondere ein Antriebskraft- Übertragungsende derselben, an dem Kurbelgehäuse (30) in Verlängerung der Kurbelwelle (29) auskragt.

4. Fahrzeug vom Typ, das im Sattel gefahren wird, nach zumindest einem der Ansprüche 1 bis 3, **dadurch gekennzeichnet, dass** die Dämpfungseinrichtung eine elastische Kupplung aufweist, die insbesondere einen antriebsseitigen Drehkörper (73) aufweist, um zusammen mit der Kurbelwelle (29) zu drehen, einen abtriebseitigen Drehkörper (74), gebildet auf der Basis der Eingangswelle (60), und dazwischen vorgesehene Dämpfungsteile (75), die vorzugsweise aus einem gummiartigen Material hergestellt sind.

5. Fahrzeug vom Typ, das im Sattel gefahren wird, nach Anspruch 4, **dadurch gekennzeichnet, dass** der abtriebsseitige Drehkörper (73) kastenförmig in einer Weise ist, um den antriebsseitigen Drehkörper (73) und die Dämpfungsteile (75) von außen abzudecken.

6. Fahrzeug vom Typ, das im Sattel gefahren wird, nach zumindest einem der Ansprüche 1 bis 5, **dadurch gekennzeichnet, dass** die Dämpfungseinrichtung (72) im Wesentlichen innerhalb des Kurbelgehäuses (30) enthalten ist.

7. Fahrzeug vom Typ, das im Sattel gefahren wird, nach zumindest einem der Ansprüche 4 bis 6, **dadurch gekennzeichnet, dass** der antriebsseitige Drehkörper (74) an seinen beiden Enden in dem Kurbelgehäuse (30) gelagert ist.

8. Fahrzeug vom Typ, das im Sattel gefahren wird, nach zumindest einem der Ansprüche 1 bis 7, **dadurch gekennzeichnet, dass** die Eingangswelle (60) an dem Kurbelgehäuse (30) mittels zweier separater Lager (69, 70) drehbar gelagert ist, die durch die Dämpfungseinrichtung (72) beabstandet sind.

9. Fahrzeug vom Typ, das im Sattel gefahren wird, nach zumindest einem der Ansprüche 1 bis 8, **dadurch gekennzeichnet, dass** das herauskragende Ende der Eingangswelle (60) verriegelnd mit einer Antriebsriemenscheibe (63) einer Riemen- Umschlingungsgetriebe- Verbindungseinrichtung (62) verbunden ist.

## Revendications

1. Véhicule muni d'un dispositif d'entraînement, comportant :
des moyens d'entraînement (4) supportés sur une carrosserie de véhicule (2), et pouvant être placés sur une surface de déplacement (3),
un moteur (6) supporté sur la carrosserie de véhicule (2),
et un engrenage de changement de vitesse (16) connectant le moyen d'entraînement (4) à un vilebrequin (29) du moteur (6),
un arbre d'entrée (60) dudit engrenage de changement de vitesse (16) étant connecté à une première extrémité dudit vilebrequin (29) via des moyens d'amortissement (72),
**caractérisé en ce que**
les moyens d'amortissement (72) sont des moyens de transmission de couple (72), une pluralité d'éléments élastiques (75) étant agencés entre les surfaces s'étendant radialement d'une carrosserie côté entraînement (73) et une carrosserie côté entraîné (74), et ledit arbre d'entrée (60) et ledit vilebrequin (29) étant disposés sur un axe de rotation commun (36)

2. Véhicule du type à selle selon la revendication 1, **caractérisé en ce que** ledit arbre d'entrée (60), en particulier une extrémité de réception de force d'entraînement de celui-ci, est supporté de manière rotative sur le carter de vilebrequin (30).

3. Véhicule du type à selle selon la revendication 1 ou 2, **caractérisé en ce que** l'arbre d'entrée (60), en particulier une extrémité de transmission de force d'entraînement de celui-ci, est en porte-à-faux sur le carter de vilebrequin (30) dans le prolongement dudit vilebrequin (29).

4. Véhicule du type à selle selon l'une quelconque des revendications 1 à 3, **caractérisé en ce que** les moyens d'amortissement comportent un embrayage élastique, comportant en particulier un corps rotatif côté entraînement (73) pour tourner ensemble avec le vilebrequin (29), un corps rotatif côté entraîné (74) formé sur la base de l'arbre d'entrée (60), et des éléments de rembourrage (75) formés entre eux, réalisés de préférence en un matériau analogue à du caoutchouc.

5. Véhicule du type à selle selon la revendication 4, **caractérisé en ce que** le corps rotatif côté entraîné (74) est en forme de boîte, de manière à recouvrir extérieurement le corps rotatif côté entraînement (73) et les éléments de rembourrage (75).

6. Véhicule du type à selle selon l'une quelconque des revendications 1 à 5, **caractérisé en ce que** lesdits moyens d'amortissement (72) sont sensiblement enfermés dans ledit carter de vilebrequin (30).

7. Véhicule du type à selle selon l'une quelconque des revendications 4 à 6, **caractérisé en ce que** le corps rotatif côté entraîné (74) est supporté à ses deux extrémités sur le carter de vilebrequin (30).

8. Véhicule du type à selle selon l'une quelconque des revendications 1 à 7, **caractérisé en ce que** l'arbre d'entrée (60) est supporté de manière rotative sur le carter de vilebrequin (30) par l'intermédiaire de deux paliers séparés (69, 70) espacés par les éléments d'amortissement (72).

9. Véhicule du type à selle selon l'une quelconque des revendications 1 à 8, **caractérisé en ce que** l'extrémité en porte-à-faux de l'arbre d'entrée (60) est connectée d'une manière à verrouillage mutuel avec une poulie d'entraînement (63) de moyens de verrouillage mutuel de type courroie enroulée (62).
